# EUROPEAN PATENT SPECIFICATION

(11) **EP 2 277 745 B1**
(45) Date of publication and mention of the grant of the patent: **28.05.2014**
(21) Application number: 10007465.7
(22) Date of filing: 19.07.2010
(51) Int. Cl.: B60R 21/0136

(54) **Occupant protection control device, occupant protection system, and occupant protection control method**
Insassenschutzsteuervorrichtung, Insassenschutzsystem und Insassenschutzsteuerverfahren
Dispositif de contrôle de protection d'occupant, système de protection d'occupant et procédé de contrôle de protection d'occupant

(30) Priority: 22.07.2009 JP 2009171343
(43) Date of publication of application: 26.01.2011
(73) Proprietor: Keihin Corporation, Shinjuku-ku, Tokyo (JP)
(72) Inventor: Oosaki, Tatsuji, Shioya-gun, Tochigi-ken (JP)
(74) Representative: Eisenführ Speiser

(56) References cited:
- EP-A2- 1 262 375
- DE-A1- 4 222 595
- DE-A1- 10 130 962
- JP-A- 2007 153 118
- US-A1- 2004 129 479

## Description

### BACKGROUND OF THE INVENTION

### Field of the Invention

The present invention relates to an occupant protection control device, an occupant protection system, and an occupant protection control method.

### Description of Related Art

In general, an SRS (Supplemental Restraint System) air bag system is known, as a system for protecting occupants during a vehicle collision. The SRS air bag system detects when a collision occurs based on acceleration data acquired from acceleration sensors (satellite sensors) installed in several parts of a vehicle, and starts occupant protection devices such as air bags, seat belt pretensioners (hereunder abbreviated to pretensioners). Such a system is known from JP 2007 153 118 A.

In another example, in Japanese Unexamined Patent Application, First Publication No. 2007-160986 (hereunder Patent Document 1), as a related art regarding the above-described pretensioners, a technology is disclosed in which the ability to protect an occupant when a vehicle collides is improved by reeling in a shoulder belt section and a lap belt section of a seat belt at the time of a frontal impact collision, and a shoulder belt section at the time of a side impact collision, by motor type pretensioners.

### SUMMARY OF THE INVENTION

In a three point seat belt system typically used, in view of its structure, it is necessary to consider whether sufficient occupant restraint is exhibited for a collision from the side (side impact collision).

Heretofore, it has been usual for pretensioners to be operated whenever there is either a frontal impact collision or a side impact collision. There is no specific problem in controlling the operation of the pretensioners in this manner in the case where a motor type pretensioner is used as in the above-described Patent Document 1. However, in the case where a pretensioner that cannot be reused is employed, such as one of the gunpowder type, since it cannot be reused, a problem occurs in that the repair cost of the pretensioner increases.

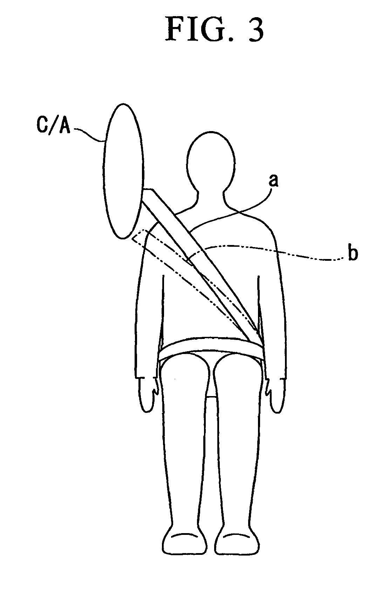

On the other hand, as shown in FIG 3, when a curtain air bag (C/A), being an occupant protection device for a side impact collision, is operated (deployed), in the case where the seat belt flexes (especially the shoulder belt section), and the curtain air bag makes contact with the shoulder belt section, it is essential that the shoulder belt section does not slip down from the shoulder of the occupant. That is, in FIG. 3, it is necessary to prevent the seat belt from slipping from an appropriate equipment location "a" down to location "b". In order to do so, consideration can be given to operating the pretensioner such that it generates sufficient tension on the seat belt to prevent the seat belt from slipping down.

The present invention has been made in consideration of the above-described circumstances, with an object of providing an occupant protection control device, an occupant protection system, and an occupant protection control method, which can reduce the repair cost and at the same time ensure the ability to protect the occupant by operating pretensioners appropriately according to the state of a vehicle collision.

In order to achieve the above-described objects, the present invention employs the following.

That is, an occupant protection control device according to a first aspect of the present invention is an occupant protection control device that performs operation control of a plurality of occupant protection devices provided in a vehicle, the occupant protection control device including a determination section that determines whether or not said vehicle has had a collision, based on acceleration data acquired from a plurality of acceleration sensors installed in predetermined locations of said vehicle, wherein when a side impact collision of said vehicle occurs, a seat belt pretensioner among said plurality of occupant protection devices is inhibited to be operated, and when a frontal oblique impact collision of said vehicle occurs, said seat belt pretensioner is operated after a curtain airbag, among said plurality of occupant protection devices, is operated.

It may be arranged such that when a side impact collision of said vehicle occurs, a side impact occupant protection device including said curtain airbag, among said plurality of occupant protection devices, is operated, and when a frontal oblique impact collision of said vehicle occurs, it is determines by said determination section whether or not said curtain airbag has been operated, and when it is determined that said curtain airbag has been operated, said seat belt pretensioner is operated.

Moreover, it may be arranged such that when a frontal impact collision of said vehicle occurs, a frontal impact occupant protection device including said seat belt pretensioner, among said plurality of occupant protection devices, is operated.

An occupant protection control device according to a second aspect of the present invention is an occupant protection control device that performs operation control of a plurality of occupant protection devices provided in a vehicle, the occupant protection control device including a determination section that determines whether or not said vehicle has had a collision, based on acceleration data acquired from a plurality of acceleration sensors installed in predetermined locations of said vehicle, wherein when a frontal impact collision of said vehicle occurs, a frontal impact occupant protection device including a seat belt pretensioner, among said plurality of occupant protection devices, is operated, and when a side impact collision of said vehicle occurs, said seat belt pretensioner is inhibited to be operated.

On the other hand, an occupant protection system according to a third aspect of the present invention is an occupant protection system including: a plurality of acceleration sensors installed in predetermined locations of a vehicle; a plurality of occupant protection devices provided in said vehicle; and an occupant protection control device according to the first and second aspects of the present invention.

Further, an occupant protection control method according to a fourth aspect of the present invention is an occupant protection control method that performs operation control of a plurality of occupant protection devices provided in a vehicle, the method including the steps of: determining whether or not said vehicle has had a collision, based on acceleration data acquired from a plurality of acceleration sensors installed in predetermined locations of said vehicle; inhibiting operation of a seat belt pretensioner among said plurality of occupant protection devices, when a side impact collision of said vehicle occurs; and operating said seat belt pretensioner after operating a curtain airbag among said plurality of occupant protection devices, when a frontal oblique impact collision of said vehicle occurs.

Moreover, an occupant protection control method according to a fifth aspect of the present invention is an occupant protection control method that performs operation control of a plurality of occupant protection devices provided in a vehicle, the method including the steps of: determining whether or not said vehicle has had a collision, based on acceleration data acquired from a plurality of acceleration sensors installed in predetermined locations of said vehicle; operating a frontal impact occupant protection device including a seat belt pretensioner, of said plurality of occupant protection devices, when a frontal impact collision of said vehicle occurs; and inhibiting operation of said seat belt pretensioner, when a side impact collision of said vehicle occurs.

According to the above-described aspect of the present invention, since the operation of the seat belt pretensioner is inhibited when a side impact collision occurs, it is possible to reduce the repair cost in the case where a seat belt pretensioner that cannot be reused is employed, such as one of the gunpowder type. Further, according to the above-described aspect of the present invention, since the seat belt pretensioner is operated after the curtain air bag is operated when a frontal oblique impact collision occurs, it is possible to prevent the seat belt from slipping down due to the operation (deployment) of the curtain air bag. Even at the time of a frontal oblique impact collision, in the case where the collision does not require the curtain air bag to be operated and the curtain air bag is not operated, the seat belt pretensioner is also not operated. Accordingly, it is possible to prevent unnecessary operation of the seat belt pretensioner.

In this manner, according to the above-described aspect of the present invention, it is possible to reduce the repair cost and at the same time ensure the ability to protect the occupant by operating the pretensioner appropriately according to the collision state of the vehicle.

### BRIEF DESCRIPTION OF THE DRAWINGS

FIG 1 is a structural schematic diagram of an occupant protection system that is provided with an occupant protection control device (SRS unit 30) according to a first embodiment of the present invention.
FIG 2A is a flow chart showing the operation control processing of occupant protection devices by the SRS unit 30 during a frontal impact collision and a side impact collision.
FIG 2B is a flow chart showing the operation control processing of the occupant protection devices by the SRS unit 30 during a frontal oblique impact collision.
FIG 3 is an explanatory diagram showing the necessary operation of the pretensioner when a curtain air bag is deployed.

### DETAILED DESCRIPTION OF THE INVENTION

Hereunder is a description of a first embodiment of the present invention with reference to the drawings.

In the following description, unless specified, a side impact collision means a collision against the side face of a vehicle, a frontal oblique impact collision means a collision against the vehicle from the frontal oblique direction of the vehicle, and a frontal impact collision means a collision against the front face of the vehicle.

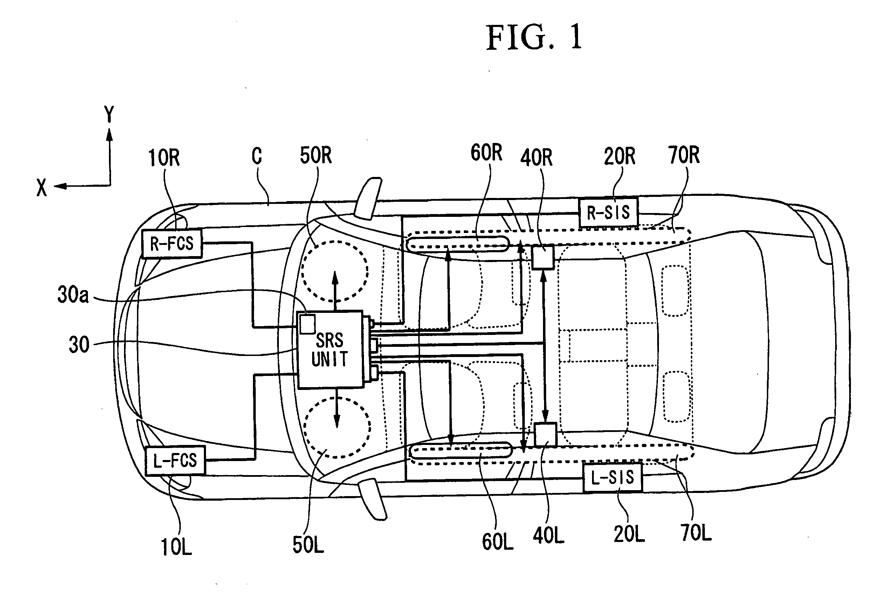

FIG. 1 is a structural schematic diagram of an occupant protection system that is provided with an occupant protection control device (SRS unit) according to the present embodiment. In the following, as an occupant protection system according to the present embodiment, an SRS air bag system is described that operates occupant protection devices such as a range of air bags and seat belt pretensioners (hereunder abbreviated to pretensioners) when a vehicle collision occurs.

As shown in FIG 1, the occupant protection system according to the present embodiment is provided with: a front crash sensor (hereunder referred to as R-FCS) 10R, which is installed on the right side of the front section of a vehicle C; a front crash sensor (hereunder referred to as L-FCS) 10L, which is installed on the left side of the front section of the vehicle C; a side impact sensor (hereunder referred to as R-SIS) 20R, which is installed on the right side of the vehicle C; a side impact sensor (hereunder referred to as L-SIS) 20L, which is installed on the left side of the vehicle C; an SRS unit 30, which is installed inside of the center floor tunnel of the vehicle C; pretensioners 40R and 40L, which are installed on the driver's seat side and the passenger's seat side respectively; front air bags 50R and 50L, which are installed on the driver's seat side and the passenger's seat side respectively; side air bags 60R and 60L, which are installed on the driver's seat side and the passenger's seat side respectively; and curtain air bags 70R and 70L, which are installed respectively on the right side of the roof and the left side of the roof of the vehicle C.

In the inside of the SRS unit 30, a unit sensor 30a is installed, which detects the acceleration acting in the longitudinal direction (X axis direction in the drawing) of the vehicle C, and the widthwise direction (Y axis direction in the drawing) of the vehicle C.

The R-FCS 10R and the L-FCS 10L are satellite sensors connected with the SRS unit 30 via communication cables, and the construction of each is such that the sensor itself for detecting the acceleration acting in the X axis direction and a control circuit for performing data communication with the SRS unit 30 are constructed as a unit. The R-FCS 10R and the L-FCS 10L convert the output signals of the acceleration sensors into acceleration data, being digital data, via the control circuits, and transmit them to the SRS unit 30.

The R-SIS 20R and the L-SIS 20L are satellite sensors connected with the SRS unit 30 via communication cables, and the construction of each is such that the sensor itself for detecting the acceleration acting in the Y axis direction and a control circuit for performing data communication with the SRS unit 30 are constructed as a unit. The R-SIS 20R and the L-SIS 20L convert the output signals of the acceleration sensors into acceleration data, being digital data, via the control circuits, and transmit them to the SRS unit 30.

The SRS unit 30 (determination section) performs collision determination of the vehicle C based on: the acceleration data transmitted from the R-FCS 10R and the L-FCS 10L, and the R-SIS 20R and the L-SIS 20L; and the acceleration data acquired from the unit sensor 30a installed thereinside. The SRS unit 30 performs operation control of each of the occupant protection devices (the pretensioners 40R and 40L, the front air bags 50R and 50L, the side air bags 60R and 60L, and the curtain air bags 70R and 70L) depending on the collision determination result. To be specific, the SRS unit 30 performs collision determination based on each of the acceleration data, and when a side impact collision occurs, it inhibits the operation of the pretensioners 40R and 40L, and when a frontal oblique collision occurs, it enables the operation of the pretensioners 40R and 40L after enabling the operation of the curtain air bags 70R and 70L.

The pretensioners 40R and 40L are pretensioners that cannot be reused, such as one of the gunpowder type, and they reel in the seat belts for the driver's seat and passenger's seat under the control of the SRS unit 30 to increase the restraint of the seat belt with respect to the occupants.

The front air bags 50R and 50L are air bags installed as occupant protection devices for a frontal impact collision. They deploy under the control of the SRS unit 30 and restrain the occupants from being thrown forwards by the collision of a vehicle C.

The side air bags 60R and 60L are air bags installed as occupant protection devices for a side impact collision. They deploy under the control of the SRS unit 30 and restrain the occupants in the driver's seat and the passenger's seat from colliding with the doors.

The curtain air bags 70R and 70L are air bags installed as occupant protection devices for a side impact collision and a frontal oblique impact collision. They deploy under the control of the SRS unit 30, and prevent the heads of the occupants seated in the front seats and rear seats from smashing against things intruding into the vehicle chamber, or smashing against the side windows or pillars.

Next is a detailed description of the operation of the occupant protection system constructed as above, in particular, the operation control processing of the occupant protection devices, which is performed by the SRS unit 30.

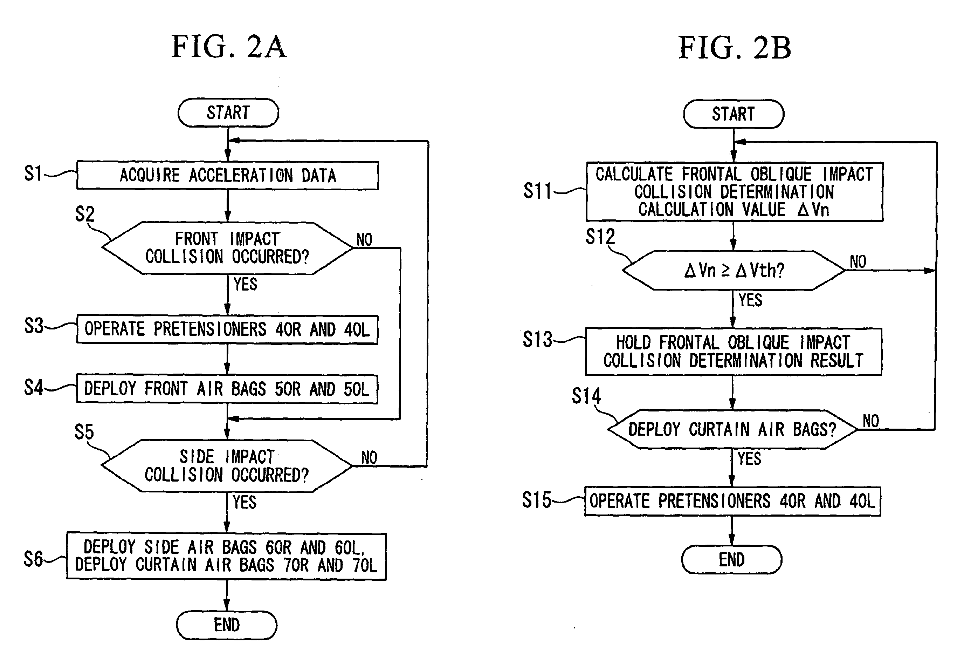

FIG 2A and FIG 2B are flow charts showing the operation control processing of the occupant protection devices, which is performed by the SRS unit 30. FIG 2A is a flow chart showing the operation control processing of the occupant protection devices during a frontal impact collision and a side impact collision, and FIG 2B is a flow chart showing the operation control processing of the occupant protection devices during a frontal oblique impact collision. The SRS unit 30 performs the operation control processing shown in FIG. 2A and FIG 2B in parallel after power is turned on (after ignition of the vehicle C).

In accordance with the flow chart of FIG 2A, the SRS unit 30 first acquires acceleration data from the R-FCS 10R, L-FCS 10L, R-SIS 20R, L-SIS 20L and the unit sensor 30a (step S1). Based on the acceleration data (that is, the acceleration acting in the X axis direction of the vehicle C) acquired from the R-FCS 10R, the L-FCS 10L, and the unit sensor 30a, among the acceleration data acquired, it is determined whether or not a frontal impact collision has occurred (step S2). To be specific, the SRS unit 30 calculates an interval integration value of the acceleration data acquired from the R-FCS 10R, the L-FCS 10L, and the unit sensor 30a, and determines whether or not a frontal impact collision has occurred by comparing the interval integration value with a frontal impact collision determination threshold value.

In the above-described step S2, in the case of "NO", that is, in the case where it is determined that no frontal impact collision has occurred, the SRS unit 30 proceeds to the processing in step S5. On the other hand, in step S2, in the case of "YES", that is, in the case where it is determined that a frontal impact collision has occurred, the SRS unit 30 operates the pretensioners 40R and 40L (step S3). This increases the restraint of the seat belt on the occupant. Subsequently, the SRS unit 30 operates (deploys) the front air bags 50R and 50L (step S4). This prevents the occupant from being thrown forward.

Then, the SRS unit 30 determines whether or not a side impact collision has occurred based on the acceleration data (that is, the acceleration acting in the Y axis direction of the vehicle C) acquired from the R-SIS 20R, the L-SIS 20L, and the unit sensor 30a, among the acceleration data acquired in step S1 (step S5). To be specific, the SRS unit 30 calculates an interval integration value of the acceleration data acquired from the R-SIS 20R, the L-SIS 20L, and the unit sensor 30a, and determines whether or not a side impact collision has occurred by comparing the interval integration value with a side impact collision determination threshold value.

In step S5, in the case of "NO", that is, in the case where it is determined that no side impact collision has occurred, the SRS unit 30 returns to the processing in step S1. On the other hand, in step S5, in the case of "YES", that is, in the case where it is determined that a side impact collision has occurred, the SRS unit 30 operates (deploys) the side air bags 60R and 60L, and the curtain air bags 70R and 70L (step S6). This prevents the occupants from colliding with the doors, and further, prevents them from smashing against the side windows or pillars. In this case, the operation of the pretensioners 40R and 40L is inhibited.

On the other hand, in accordance with the flow chart of FIG 2B, the SRS unit 30 calculates a frontal oblique impact collision determination calculation value based on the acceleration data acquired from the R-FCS 10R, the L-FCS 10L, and the unit sensor 30a (that is, the acceleration acting in the X axial direction of the vehicle C), and the acceleration data acquired from the R-SIS 20 and L-SIS 20L, among the acceleration data acquired in step S1 of FIG 2A (step S11). To be specific, the SRS unit 30 calculates a frontal oblique impact collision determination calculation value (change in velocity) ΔVn by interval integrating each of the acceleration data acquired from the R-FCS 10R, the L-FCS 10L, the R-SIS 20R, the L-SIS 20L, and the unit sensor 30a.

Then, the SRS unit 30 determines whether or not a frontal oblique impact collision has occurred by comparing the frontal oblique impact collision determination calculation value ΔVn with a frontal oblique impact collision determination threshold value ΔVth (step S12). Since the frontal oblique impact collision determination threshold value ΔVth is set to be a value lower than the frontal impact collision determination threshold value, the occurrence of a frontal oblique impact collision is detected earlier than the occurrence of a frontal impact collision.

In step S12, in the case of "NO", that is, in the case where ΔVn < ΔVth, and it is determined that no frontal oblique impact collision has occurred, the SRS unit 30 returns to the processing of step S11. On the other hand, in step S 12, in the case of "YES", that is, in the case where ΔVn ≥ ΔVth, and it is determined that a frontal oblique impact collision has occurred, the SRS unit 30 holds the determination result of the frontal oblique impact collision (step S13). Subsequently, it is determined whether or not the curtain air bags 70R and 70L have been deployed in the operation control processing of FIG 2A (step S 14).

In step S 14, in the case of "NO", that is in the case where the curtain air bags 70R and 70L have not been deployed in the operation control processing of FIG. 2A, the SRS unit 30 returns to the processing of step S11. On the other hand, in step S14, in the case of "YES", that is in the case where the curtain air bags 70R and 70L have been deployed in the operation control processing of FIG. 2A, the SRS unit 30 operates the pretensioners 40R and 40L (step S15). This generates sufficient tension in the seat belts, and prevents the seat belts from slipping down.

As described above, according to the present embodiment, the operation of the pretensioners 40R and 40L is inhibited when a side impact collision occurs. Therefore it is possible to reduce the repair cost in the case where pretensioners 40R and 40L that cannot be reused are employed, such as one of the gunpowder type. Further, when a frontal oblique impact collision occurs, the pretensioners 40R and 40L are operated after the curtain air bags 70R and 70L are operated (deployed). Therefore it is possible to prevent the seat belts from slipping down due to the deployment of the curtain air bags 70R and 70L. Even at the time of a frontal oblique impact collision, in the case where the collision does not require the operation of the curtain air bags 70R and 70L and the curtain air bags 70R and 70L are not operated (in the case of "NO" in step S5 of FIG 2A), the pretensioners 40R and 40L are also not operated. Therefore, it is possible to prevent unnecessary operation of the pretensioners 40R and 40L (which contributes to a reduction of the repair cost).

In this manner, according to the present embodiment, it is possible to reduce the repair cost and at the same time ensure the ability to protect the occupant by operating the pretensioners 40R and 40L appropriately depending on the collision state of the vehicle C.

) In the above-described embodiment, as an example of a method of frontal impact collision determination, side impact collision determination, and frontal oblique impact collision determination, a method is given in which an interval integration value calculated from the acceleration data and a predetermined threshold value are compared. However, the present invention is not limited to this method. For example, a method can be employed in which a cumulative integration value of acceleration data, or the acceleration data itself, is compared with a predetermined threshold value.

While a preferred embodiment of the invention has been described and illustrated above, it should be understood that this is an exemplary of the invention and is not to be considered as limiting. Additions, omissions, substitutions, and other modifications can be made without departing from the scope of the present invention. Accordingly, the invention is not to be considered as being limited by the foregoing description, and is only limited by the scope of the appended claims.

## Claims

1. An occupant protection control device that performs operation control of a plurality of occupant protection devices (40R, 40L, 50R, 50L, 60R, 60L, 70R, 70L) provided in a vehicle, the occupant protection control device comprising a determination section that determines whether or not said vehicle has had a collision, based on acceleration data acquired from a plurality of acceleration sensors installed in predetermined locations of said vehicle, wherein
when a side impact collision of said vehicle occurs, a seat belt pretensioner (40R, 40L) among said plurality of occupant protection devices is inhibited to be operated, and
when a frontal oblique impact collision of said vehicle occurs, said seat belt pretensioner (40R, 40L) is operated after a curtain airbag (60R, 60L), among said plurality of occupant protection devices, is operated.

2. The occupant protection control device according to claim 1, wherein
when a side impact collision of said vehicle occurs, a side impact occupant protection device including said curtain airbag (60R, 60L), among said plurality of occupant protection devices, is operated,
when a frontal oblique impact collision of said vehicle occurs, it is determines by said determination section whether or not said curtain airbag has been operated, and
when it is determined that said curtain airbag has been operated, said seat belt pretensioner (40R, 40L) is operated.

3. The occupant protection control device according to either one of claims 1 and 2, wherein
when a frontal impact collision of said vehicle occurs, a frontal impact occupant protection device including said seat belt pretensioner (40R, 40L), among said plurality of occupant protection devices, is operated.

4. An occupant protection system comprising:
a plurality of acceleration sensors (10R, 10L, 20R, 20L) installed in predetermined locations of a vehicle;
a plurality of occupant protection devices provided in said vehicle; and
an occupant protection control device according to claim 1.

5. An occupant protection control method that performs operation control of a plurality of occupant protection devices provided in a vehicle, the method comprising the steps of:
determining whether or not said vehicle has had a collision (S12), based on acceleration data acquired from a plurality of acceleration sensors installed in predetermined locations of said vehicle;
inhibiting operation of a seat belt pretensioner among said plurality of occupant protection devices, when a side impact collision of said vehicle occurs; and
operating said seat belt pretensioner (S15) after operating a curtain airbag (S14) among said plurality of occupant protection devices, when a frontal oblique impact collision of said vehicle occurs.

## Patentansprüche

1. Insassenschutz-Steuervorrichtung, welche eine Betriebssteuerung einer Mehrzahl von Insassenschutzvorrichtungen (40R, 40L, 50R, 50L, 60R, 60L, 70R, 70L) durchführt, bereitgestellt in einem Fahrzeug, wobei die Insassenschutz-Steuervorrichtung einen Bestimmungsabschnitt umfasst, der bestimmt, ob das Fahrzeug einen Aufprall gehabt hat, auf der Grundlage von Beschleunigungsdaten, welche von einer Mehrzahl von Beschleunigungssensoren erlangt worden sind, welche in vorbestimmten Orten des Fahrzeugs installiert sind, wobei
wenn ein Seitenaufprall des Fahrzeugs vorliegt, ein Sitzgurtstraffer (40R, 40L) von der Mehrzahl von Insassenschutzvorrichtungen am Betrieb gehindert wird, und
wenn ein Frontalaufprall des Fahrzeugs vorliegt, der Sitzgurtstraffer (40R, 40L) nach einem Vorhangairbag (60R, 60L) von der Mehrzahl von Insassenschutzvorrichtungen betrieben wird.

2. Insassenschutz-Steuervorrichtung nach Anspruch 1, wobei
wenn ein Seitenaufprall des Fahrzeugs vorliegt, eine Seitenaufprallinsassenschutzvorrichtung umfassend den Vorhangairbag (60R, 60L) von der Mehrzahl von Insassenschutzvorrichtungen betrieben wird,
wenn ein Frontalaufprall des Fahrzeug vorliegt, durch den Bestimmungsabschnitt bestimmt wird, ob der Vorhangairbag betrieben worden ist, und
wenn bestimmt worden ist, dass der Vorhangairbag betrieben worden ist, der Sitzgurtstraffer (40R, 40L) betrieben wird.

3. Insassenschutz-Steuervorrichtung nach einem der Ansprüche 1 und 2, wobei
wenn ein Frontalaufprall des Fahrzeugs vorliegt, eine Frontalaufprallinsassenschutzvorrichtung umfassend den Sitzgurtstraffer (40R, 40L) von der Mehrzahl von Insassenschutzvorrichtungen betrieben wird.

4. Insassenschutzsystem umfassend:
eine Mehrzahl von Beschleunigungssensoren (10R, 10L, 20R, 20L), welche in vorbestimmten Orten eines Fahrzeugs installiert sind;
eine Mehrzahl von Insassenschutzvorrichtungen, welche in dem Fahrzeug bereitgestellt sind; und
eine Insassenschutz-Steuervorrichtung nach Anspruch 1.

5. Insassenschutz-Steuerverfahren, welches eine Betriebssteuerung einer Mehrzahl von Insassenschutzvorrichtungen durchführt, welche in einem Fahrzeug bereitgestellt sind, wobei das Verfahren die folgenden Verfahrensschritte umfasst:
Bestimmen (S22) ob das Fahrzeug einen Aufprall erlitten hat, auf der Grundlage von Beschleunigungsdaten, welche von einer Mehrzahl von Beschleunigungssensoren erlangt worden sind, welche in vorbestimmten Orten des Fahrzeugs installiert worden sind;
Hindern des Betriebs eines Sitzgurtstraffers von der Mehrzahl von Insassenschutzvorrichtungen, wenn ein Seitenaufprall des Fahrzeugs vorliegt; und
Betreiben (S15) des Sitzgurtstraffers nach dem Betreiben (S14) eines Vorhangairbags von der Mehrzahl von Insassenschutzvorrichtungen, wenn ein Frontalaufprall des Fahrzeugs vorliegt.

## Revendications

1. Dispositif de commande de la protection d'un occupant, qui effectue une commande de fonctionnement d'une pluralité de dispositifs (40R, 40L, 50R, 50L, 60R, 60L, 70R, 70L) de protection d'un occupant prévus dans un- véhicule, le dispositif de commande de la protection d'un occupant comprenant une section de détermination qui détermine si ou non le véhicule a eu une collision, sur la base de données d'accélération acquises d'une pluralité de capteurs d'accélération installés en des emplacements déterminés à l'avance du véhicule, dans lequel
lorsqu'une collision par choc latéral du véhicule se produit, un dispositif (40R, 40L) de mise sous tension préalable d'une ceinture de siège, parmi la pluralité de dispositifs de protection d'un occupant, est empêché de fonctionner et
lorsqu'une collision par choc oblique frontal du véhicule se produit, le dispositif (40R, 40L) de mise sous tension préalable d'une ceinture de siège fonctionne après qu'un coussin (60R, 60L) d'air en rideau, parmi la pluralité de dispositifs de protection d'un occupant, est mis en fonctionnement.

2. Dispositif de commande de la protection d'un occupant suivant la revendication 1, dans lequel
lorsqu'une collision par choc latéral du véhicule se produit, un dispositif de protection d'un occupant par choc latéral comprenant le coussin (60R, 60L) d'air en rideau, parmi la pluralité de dispositifs de protection d'un occupant, est mis en fonctionnement,
lorsqu'une collision par choc oblique frontal du véhicule se produit, il est déterminé par la section de détermination si ou non le coussin d'air en rideau a été mis en fonctionnement et
lorsqu'il est déterminé que le coussin d'air en rideau a été mis en fonctionnement, le dispositif (40R, 40L) de mise sous tension préalable de la ceinture de siège est mis en fonctionnement.

3. Dispositif de commande de la protection d'un occupant suivant l'une quelconque des revendications 1 et 2, dans lequel
lorsqu'une collision par choc frontal du véhicule se produit, un dispositif de protection d'un occupant d'un choc frontal comprenant le dispositif (40R, 40L) de mise sous tension préalable de la ceinture de siège, parmi la pluralité de dispositifs de protection d'un occupant, est mis en fonctionnement.

4. Système de protection d'un occupant comprenant :
une pluralité de capteurs (10R, 10L, 20R, 20L) d'accélération installés en des emplacements déterminés à l'avance d'un véhicule ;
une pluralité de dispositifs de protection d'un occupant prévus dans le véhicule ; et
un dispositif de commande de la protection d'un occupant suivant la revendication 1.

5. Procédé de commande de la protection d'un occupant qui effectue une commande du fonctionnement d'une pluralité de dispositifs de protection d'un occupant prévus dans un véhicule, procédé dans lequel :
on détermine si ou non le véhicule a eu une collision (S22), sur la base de données d'accélération acquises d'une pluralité de capteurs d'accélération installés en des emplacements déterminés à l'avance du véhicule ;
on empêche le fonctionnement d'un dispositif de mise sous tension préalable d'une ceinture de siège parmi la pluralité de dispositifs de protection d'un occupant, lorsqu'une collision par choc latéral du véhicule se produit ; et
on fait fonctionner le dispositif (S15) de mise sous tension préalable d'une ceinture de siège après avoir fait fonctionner un coussin (S14) d'air en rideau parmi la pluralité de dispositifs de protection d'un occupant, lorsqu'une collision par choc oblique frontal du véhicule se produit.
